# DEMANDE DE BREVET EUROPEEN

(11) **EP 4 269 244 A1**
(43) Date de publication de la demande: **01.11.2023**
(21) Numéro de dépôt: 23166432.7
(22) Date de dépôt: 04.04.2023
(51) Int. Cl.: B64D 13/06, B64D 41/00, B64F 1/36, G05B 13/02, G06Q 50/30, G06Q 10/06

(54) **PROCÉDÉ DE CONDITIONNEMENT D' AIR DE LA CABINE D'UN AÉRONEF AU SOL EN FONCTION DES SOURCES DE PUISSANCE DISPONIBLES**

(30) Priorité: 26.04.2022 FR 2203902
(71) Demandeur: Revima Group, 76490 Rives-en-Seine (FR)
(72) Inventeur: BLANQUET, Romain, 31490 BRAX (FR); TRZECIAKOWSKA, Magdalena, 76400 SENNEVILLE-SUR-FECAMP (FR); HODAC, Olivier, 31400 TOULOUSE (FR)
(74) Mandataire: Ipside

(57) **Abrégé**

Procédé (500) de conditionnement d'air d'une cabine d'un aéronef (10) au sol dans un aéroport, au moyen d'au moins une source de puissance électrique et/ou pneumatique (20), comprenant : une étape (510) de collecte en temps réel de données relatives à l'aéronef et à son plan de vol, aux sources de puissance, aux infrastructures de l'aéroport, etc. ; une étape (520) de détermination des sources de puissance disponibles ; une étape (530) d'évaluation de la performance de chaque source de puissance disponible en fonction d'une température de consigne et de données collectées ; une étape (540) de détermination d'un ensemble optimal comprenant au moins une source de puissance disponible ; si cet ensemble optimal n'est pas utilisé, le procédé comprend en outre : une étape (560) d'alerte ; et une étape (570) de recommandation de l'utilisation dudit ensemble optimal.

## Description

### DOMAINE TECHNIQUE

La présente invention appartient au domaine du conditionnement d'air des cabines d'aéronefs, notamment d'avions de ligne au sol avant leur décollage, et concerne plus particulièrement un procédé de conditionnement d'air de la cabine d'un aéronef au sol (pendant la phase d'embarquement par exemple) en fonction des sources de puissance électrique et pneumatique disponibles.

### ÉTAT DE LA TECHNIQUE

Dans le domaine de l'aviation, le conditionnement d'air est essentiel et concerne en premier lieu la climatisation dans les cabines d'avions, surtout lorsque les conditions météorologiques (température et humidité extérieures) ne sont pas favorables au confort des passagers et du personnel de bord.

Néanmoins, l'utilisation de la climatisation peut largement dépasser le besoin réel et occasionner une surconsommation inutile d'énergie (gaspillage) et donc des coûts d'exploitation plus élevés pour les compagnies aériennes.

Il est en effet fréquemment observé un recours excessif à la climatisation à bord des avions, que ce soit par trop grande anticipation du départ, par prolongation de son usage à l'arrivée ou bien par simple négligence (portes laissées ouvertes, température de consigne trop basse par exemple).

Dans bon nombre d'escales et de par les charges thermiques que subit l'avion (rayonnement solaire sur la peau du fuselage, dissipation thermique d'équipements électroniques de bord, charge métabolique des passagers, etc.), l'utilisation de la climatisation devient nécessaire pour assurer le confort des passagers. L'utilisation de la climatisation est ainsi tellement importante qu'elle constitue l'un des postes principaux dimensionnant la consommation d'énergie d'un avion au sol. Lorsqu'un avion n'est raccordé à aucune source d'énergie externe, c'est son groupe auxiliaire de puissance dit APU (*Auxiliary Power Unit* en anglais) qui lui assure la fourniture des énergies électrique et pneumatique nécessaires au conditionnement d'air de la cabine. La consommation de carburant de l'APU est significative (de 120 kg/heure pour un avion monocouloir à plus de 300 kg/heure pour un avion gros porteur).

Dans un contexte de renchérissement des prix des carburant et de réglementations imposant des limites d'émissions de CO₂ dans les aéroports, limiter l'usage de l'APU est devenu une nécessité et cela passe notamment par l'optimisation de l'utilisation de la climatisation dans un avion.

En effet, certains aéroports ont strictement réglementé l'utilisation des APU par les avions qui y transitent, soit en l'interdisant pour les avions garés aux portes d'embarquement soit en l'interdisant totalement.

En effet, si les APU sont utiles dans les aéroports où l'assistance au sol est limitée, la plupart des aéroports ont désormais commencé à installer des sources externes de puissance (puissance électrique fixe au sol et système d'air préconditionné), généralement aux portes d'embarquement.

Raccorder l'avion à une source externe de puissance pneumatique telle qu'un PCA (*Pre-Condioned Air*) ou un ACU (*Air Conditioning Unit*) est une solution plus économique et qui permet de réduire les émissions de CO₂ (d'un facteur 8 au moins) pour climatiser la cabine d'un avion. Cependant, tout comme pour l'APU, assurer un usage optimal des sources de puissance externes reste un objectif difficile à atteindre mais particulièrement avantageux. Souvent, les puissances froides délivrées par les sources externes pneumatiques (PCA ou ACU) sont inférieures à celles de l'APU, elles mettent donc plus de temps à refroidir la cabine.

Ayant remplacé l'APU par un PCA ou un ACU, l'avion doit également être alimenté électriquement par un groupe de puissance électrique au sol tel qu'un GPU (*Ground Power Unit*) ou un FEGP (*Fixed Electrical Ground Power*). Que le GPU soit alimenté par un moteur diesel ou qu'il soit hybride, il peut s'avérer plus compétitif qu'un FEGP mais plus émissif en termes de CO₂.

Il existe des solutions permettant d'ajuster la température de la cabine d'un aéronef lors de la préparation avant le vol dudit aéronef.

A titre d'exemple, le document US10752376B2 décrit un système de préparation avant vol pour aéronef, comprenant un ou plusieurs modules d'alimentation électriques, dans lequel un contrôleur intégré est couplé électriquement et de manière communicative aux modules d'alimentation pour les surveiller et les commander afin de fournir de l'énergie électrique aux sous-systèmes de l'aéronef. Dans cette solution, un dispositif mobile tel qu'un smartphone peut se connecter au contrôleur intégré pour lui communiquer des instructions de préparation avant le vol de l'aéronef et pour surveiller l'état de cette préparation. De plus, ce document décrit un procédé de pré-conditionnement d'un aéronef comprenant la détermination d'un état de charge d'un APU et l'activation d'un sous-système de contrôle environnemental pour préconditionner l'aéronef en ajustant une température actuelle selon un profil de pré-conditionnement basé sur un ou plusieurs paramètres parmi : une température cible, un temps cible, une température actuelle, une température de l'air extérieur, une quantité d'énergie et un état de charge de l'APU. Toutefois, cette solution repose uniquement sur l'utilisation de l'APU qui est une source interne de puissance, et ne tient pas compte de la présence de sources externes de puissance et n'offre pas la possibilité d'optimiser le choix de la (ou des) source(s) de puissance disponible(s) pour conditionner l'aire de la cabine.

Le document FR3019358B1 décrit un procédé et un dispositif de gestion globale optimisée d'un réseau énergétique d'un aéronef comprenant une pluralité d'équipements énergétiques, caractérisé en ce qu'il comprend un module de sélection d'au moins un objectif d'optimisation parmi une pluralité d'objectifs prédéterminés, un module de réception de données d'équipements, un module de réception de données d'aéronef, et un module de détermination de consignes de fonctionnement des équipements énergétiques à partir des données d'équipements et des données d'aéronef adaptées pour atteindre au moins un objectif d'optimisation sélectionné.

Cette solution ne concerne pas non plus un conditionnement d'air optimisé en fonction des sources internes et externes de puissance disponibles lorsque l'avion est au sol.

### PRÉSENTATION DE L'INVENTION

La présente invention vise à pallier les inconvénients de l'art antérieur exposés ci-avant et propose une solution permettant de recommander la ou les sources de puissance optimales pour le conditionnement d'air d'une cabine d'avion au sol en tenant compte de la consommation et donc du coût énergétique et de l'empreinte carbone.

Ainsi, un objectif de la présente invention est d'optimiser le conditionnement d'air d'une cabine d'un aéronef au sol en définissant et en recommandant le juste usage d'énergie nécessaire pour atteindre une température de consigne en fonction de paramètres multiples comprenant notamment ladite température de consigne, une température extérieure, une température intérieure, une heure de départ de l'aéronef, etc.

Un autre objectif de la présente invention est d'atteindre un optimum à la fois dans le choix de la source de puissance pneumatique et électrique à utiliser au sol et quant à son temps d'utilisation lorsqu'il s'agit de préparer un avion avant son départ. À cet effet, la présente invention a pour objet un procédé de conditionnement d'air d'une cabine d'un aéronef au sol dans un aéroport, au moyen d'au moins une source, interne ou externe, de puissance électrique et/ou pneumatique, remarquable en ce qu'il comprend :
- une étape de collecte en temps réel de données comprenant des paramètres de l'aéronef, des paramètres de sources de puissance, des données de vol de l'aéronef, des données d'infrastructures et d'équipements de l'aéroport ;
- une étape de détermination des sources internes et externes de puissance disponibles, à partir d'une base de données d'équipements de l'aéroport ;
- une étape d'évaluation, par des algorithmes spécifiques, d'une performance de chaque source de puissance disponible en fonction d'une température de consigne à atteindre dans la cabine et de données collectées ;
- une étape de détermination d'un ensemble optimal de puissance comprenant au moins une source de puissance parmi les sources de puissance disponibles ;
- une étape de vérification de l'utilisation de l'ensemble optimal ; et
- des étapes conditionnelles d'alerte et de recommandation de l'utilisation dudit ensemble optimal, en cas de non utilisation détectée.

Avantageusement, les paramètres de l'aéronef comprennent une température intérieure de la cabine, une température extérieure, des paramètres d'un moteur principal et d'un APU, et la température de consigne.

Selon l'invention, les sources externes de puissance comprennent un GPU, un ACU, un PCA et un FEGP.

Selon un mode de réalisation, l'étape de détermination des sources internes et externes de puissance disponibles met en oeuvre des algorithmes de détection automatique de connexion entre l'aéronef et une quelconque source de puissance. Selon un mode de réalisation avantageux, la performance d'une source de puissance comprend son aptitude et le temps nécessaire à ladite source pour réaliser un conditionnement d'air de la cabine à la température de consigne.

De façon avantageuse, l'étape de détermination de l'ensemble optimal présente pour chaque source de puissance un niveau de sélection selon la performance de la source, un niveau de sélection selon un coût énergétique ou monétaire de l'utilisation de la source et un niveau de sélection selon des émissions polluantes (CO₂) lors de l'utilisation de la source.

Selon un mode de réalisation, l'étape de détermination de l'ensemble optimal est réalisée par apprentissage automatique.

La présente invention a également pour objet une plateforme numérique comprenant des moyens informatiques de calcul et de stockage, apte à communiquer sur un réseau, et configurée pour mettre en oeuvre un procédé de conditionnement d'air d'une cabine d'un aéronef au sol tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé de conditionnement d'air d'une cabine d'un aéronef au sol, conforme aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés de manière schématique et ne sont pas nécessairement à la même échelle. Sur l'ensemble des figures, les éléments identiques ou équivalents portent la même référence numérique.

Il est ainsi illustré en :
- Figure 1 : une vue de dessus d'un aéronef stationné au sol et à proximité duquel se trouvent des sources de puissance externes ;
- Figure 2 : une vue de côté d'un aéronef stationné au sol ;
- Figure 3 : un organigramme des principales étapes d'un procédé de conditionnement d'air d'une cabine d'aéronef selon l'invention ;
- Figure 4 : un exemple de mise en oeuvre du procédé de conditionnement d'air selon l'invention.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un procédé de conditionnement d'air de la cabine d'un aéronef au sol, destiné principalement aux avions de ligne pendant leur phase de stationnement au sol. Cet exemple, non limitatif, est donné pour une meilleure compréhension de l'invention et n'exclut pas la mise en oeuvre du procédé dans d'autres types d'aéronefs pouvant également avoir recours à des sources externes de puissances.

Dans la présente description, certains équipements sont désignés par leurs sigles anglais, couramment employés dans le jargon aéronautique, qu'on peut traduire comme suit :
- APU (*Auxiliary Power Unit*) : groupe auxiliaire de puissance ;
- GPU (*Ground Power Unit*) : groupe de parc ou groupe de puissance au sol ;
- ACU (*Air Conditioning Unit*) : groupe de climatisation ;
- PCA (*Pre-conditioned Air*) : unité d'air préconditionné ;
- FEGP (*Fixed Electrical Ground Power*) : ensemble fixe de puissance électrique au sol.

Chacun des équipements précités sera génériquement appelé « source de puissance électrique et/ou pneumatique », ou tout simplement « source de puissance ». Une source de puissance est dite interne lorsqu'elle appartient à l'aéronef, et externe lorsqu'elle n'appartient pas à l'aéronef et qu'elle ne peut lui être reliée qu'une fois au sol. Ainsi, l'APU et les moteurs principaux d'un avion sont des sources internes de puissances, tandis que les équipements du type GPU, ACU, PCA et FEGP sont des sources externes de puissance.

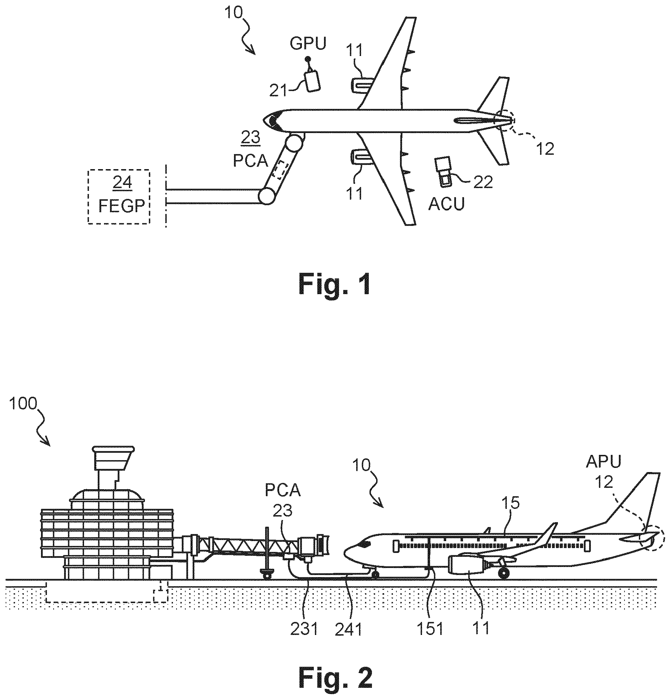

La figure 1 représente un avion 10 stationné à une porte d'embarquement d'un aéroport, et s'apprêtant par exemple à un départ suivant un programme de vol prédéfini. Pendant son stationnement au sol, des opérations sont réalisées sur l'aéronef 10, notamment l'embarquement ou le débarquement de passagers, le chargement ou le déchargement du fret, l'avitaillement en carburant et la maintenance.

Certaines de ces opérations, en particulier l'embarquement de passagers, nécessitent un conditionnement d'air de la cabine de l'avion 10. À cet effet, une ou plusieurs sources internes ou externes de puissance électrique et/ou pneumatique peuvent être utilisées.

Comme sources internes de puissance disponibles au sol, l'avion 10 comprend au moins un moteur principal 11 et un APU 12.

Comme sources externes de puissance, l'avion 10 peut avoir à sa disposition un GPU 21, un ACU 22, un PCA 23, un FEGP 24, ainsi que tout autre système analogue.

La figure 2 représente l'avion 10, dans un aéroport 100 à proximité d'une porte d'embarquement, en train d'être alimenté en énergie pneumatique par un PCA 23 et en énergie électrique par un FEGB de l'aéroport (non visible sur la figure).

En effet, le PCA 23 est raccordé à un système de conditionnement d'air 15 de l'avion 10 au moyen de conduits d'air 231 flexibles connectés à un dispositif de raccordement 151 adapté situé dans une partie inférieure du fuselage de l'avion. Le FEGP est quant à lui relié électriquement à une prise de l'avion 10 au moyen de câbles électriques 241.

L'avion 10 et les sources de puissance disponibles au sol permettent ainsi la mise en oeuvre d'un procédé selon l'invention pour optimiser le conditionnement d'air de la cabine dudit avion en fonction de plusieurs paramètres.

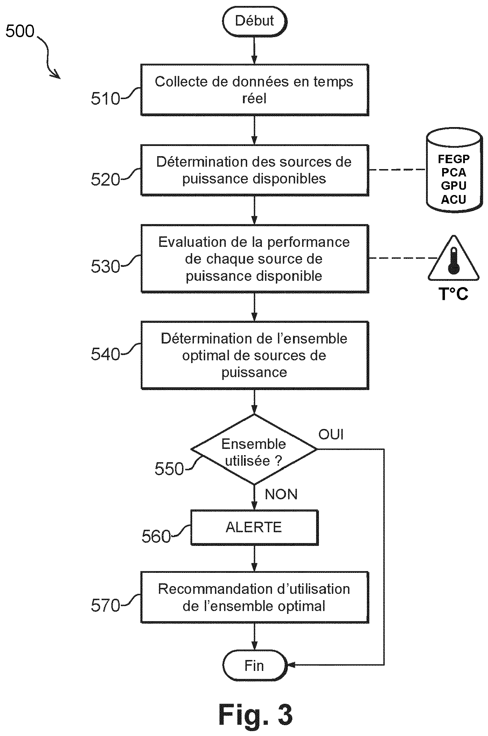

La figure 3 représente les principales étapes d'un procédé 500 de conditionnement d'air d'une cabine d'avion au sol en fonction des sources internes et externes de puissance disponibles au sol, ledit procédé comprenant :
- une étape 510 de collecte de données en temps réel à partir d'équipements de l'avion, de sources de puissance, de l'aéroport dans lequel se trouve l'avion, d'une compagnie aérienne opérant le vol, etc. ;
- une étape 520 de détermination de toutes les sources internes et externes de puissance disponibles pour effectuer le conditionnement d'air ;
- une étape 530 d'évaluation de la capacité et de la performance de chacune des sources de puissance disponibles pour atteindre une température de consigne ;
- une étape 540 de détermination d'un ensemble optimal comprenant au moins une source de puissance disponible, compte tenu des performances évalués ;
- une étape 550 de vérification si ledit ensemble optimal est utilisé ou prévu pour fournir l'énergie nécessaire au conditionnement d'air de la cabine ;
- des étapes conditionnelles d'alerte 560 et de recommandation d'utilisation 570, en cas de non utilisation ou d'utilisation non prévue de l'ensemble optimal ;

Bien entendu, certaines étapes peuvent être réalisées simultanément ou selon un ordre inversé. Les étapes 510 et 520 peuvent par exemple être inversées ou réalisées simultanément, et les étapes 560 et 570 peuvent être réalisées simultanément, ou correspondre à une seule et même étape de recommandation sous forme d'alerte. Typiquement, ces deux dernières étapes correspondent à des actions à destination de l'utilisateur (opérateur humain) et peuvent donc être adaptées et réalisées selon le besoin de chaque utilisateur.

L'étape 510 de collecte de données consiste à collecter en temps réel une multitude de paramètres dont dépend directement ou indirectement l'optimisation du conditionnement d'air de la cabine. Ces paramètres proviennent essentiellement de l'avion et de ses sources internes de puissance disponibles au sol, des sources externes de puissance, de l'aéroport et de la compagnie aérienne opérant le vol. Les paramètres de l'avion comprennent par exemple des paramètres de fonctionnement des moteurs et de l'APU, la température intérieure de la cabine, la température extérieure mesurée par l'avion, etc.

Les paramètres des sources externes de puissance électrique et/ou pneumatique comprennent leurs paramètres fonctionnels (puissance, durée, consommation, disponibilité, etc.).

Les paramètres de l'aéroport comprennent par exemple des informations relatives aux infrastructures, aux équipements disponibles, à leurs emplacements, etc.

Les paramètres de la compagnie aérienne comprennent principalement des informations de la feuille de vol (heure de départ et d'arrivée du vol, escales, durées des escales, etc.).

La collecte en temps réel de ces données s'effectue via une plateforme numérique de mise en oeuvre du procédé assurant une connectivité en temps réel avec les différentes sources de données précitées.

Par exemple, certaines données peuvent être directement collectées à partir de base de données accessibles sur réseau (tel que internet), notamment une base de données indiquant le niveau d'équipement en sources externes de puissance de l'aéroport au niveau de chaque porte d'embarquement, et une base de données spécialisée indiquant le coût et l'empreinte carbone de la fourniture d'une unité de puissance électrique (1kW par exemple) pour chaque aéroport.

L'étape 520 de détermination des sources internes et externes de puissance disponibles au sol consiste à répertorier toutes les sources de puissance susceptibles d'être utilisées pour fournir l'énergie nécessaire au conditionnement d'air de la cabine.

Par exemple, des algorithmes de détection automatique de la connexion de l'avion avec des sources de puissance peuvent être utilisés. En ce qui concerne les sources internes (moteur principal et APU), ces algorithmes peuvent directement détecter leur activité à partir des données des systèmes avioniques.

L'étape 530 d'évaluation de la performance consiste à déterminer pour chaque source de puissance disponible une aptitude et un temps nécessaire pour atteindre la température cabine de consigne.

Par exemple, l'aptitude d'une source de puissance correspond à sa capacité à produire de l'énergie sous une forme donnée : électrique et/ou pneumatique ; et le temps nécessaire dépend directement de la puissance et du régime de fonctionnement de la source.

La détermination de la performance est réalisée au moyen d'algorithmes spécifiques implémentés sur la plateforme de mise en oeuvre du procédé.

L'étape 540 de détermination de l'ensemble optimal consiste ensuite à choisir l'ensemble le plus performant compte tenu d'une fonction de coût à minimiser.

La fonction de coût peut notamment être le coût économique, l'émission de CO₂, etc.

L'ensemble optimal peut bien entendu comporter une seule ou plusieurs sources de puissance combinées.

Le choix de l'ensemble optimal se fait par niveaux de sélection, et donc par éliminations consécutives de sources de puissance potentielles au fur et à mesure de la sélection.

En effet, parmi toutes les sources de puissance, seuls sont retenus les ensembles aptes à fournir toutes les formes d'énergies nécessaires, puis ceux avec un temps nécessaire respectant le délai avant le départ de l'avion (fixé par l'heure de départ). Ensuite, si à l'issue de cette première sélection, plusieurs ensembles restent possibles, le coût économique et l'empreinte carbone permettront de sélectionner l'ensemble optimal.

Par exemple, pour un embarquement passager ayant lieu à T0 + 55 min (T0 étant l'heure d'interrogation des différentes sources de puissance), la plateforme de mise en oeuvre du procédé analyse toutes les options possibles de fourniture de puissance pneumatique et électrique, et évalue les performances comme suit :

| Source de puissance | Statut | Temps pour atteindre la température de consigne | Coût | Empreinte carbone |
|---|---|---|---|---|
| APU | Disponible | 25 min | 75 $ | 215 kg CO2e |
| ACU | Indisponible | - | - | - |
| PCA | Disponible | 40 min | 15$ | 22 kg CO2e |
| GPU | Disponible | - | 13 $ | 40 kg CO2e |
| FEGP | Disponible | - | 10 $ | 11 kg CO2e |

Au vu de cet exemple, il est déterminé que la solution optimale est l'utilisation du PCA et du FEGP. Si l'embarquement est prévu à T0 + 30 min, alors c'est l'APU qu'il est nécessaire d'utiliser.

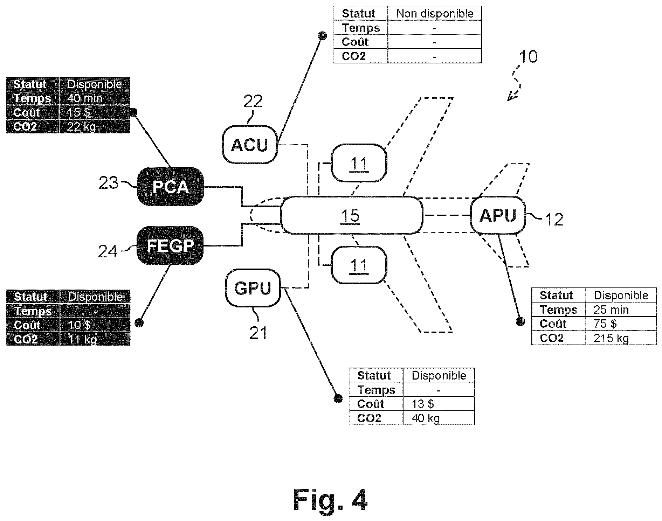

La figure 4 schématise ce scénario et donne également un exemple d'interface graphique possible pour utiliser le procédé sur un terminal utilisateur.

Cette interface peut être complétée par un affichage spécial en cas d'alerte, destiné au personnel au sol (*handleren* anglais) et au personnel technique de la compagnie aérienne opérant le vol.

L'étape de détermination de l'ensemble optimal peut être réalisée par apprentissage automatique afin de ne pas comparer toutes les performances évaluées de toutes les sources de puissance disponible à chaque mise en oeuvre du procédé, et de recommander plus efficacement l'ensemble optimal en se basant sur les historiques de recommandations faites auprès des utilisateurs. Les informations historiques constituent ainsi des données d'entraînement de plus en plus importantes au fur et à mesure du déploiement de la solution logicielle associée au procédé chez les utilisateurs.

Il ressort clairement de la présente description que certaines étapes du procédé peuvent être modifiées, remplacées ou supprimées et que certains ajustements peuvent être apportés à la mise en oeuvre de ce procédé selon les objectifs visés, sans pour autant sortir du cadre de l'invention.

## Revendications

1. Procédé (500) de conditionnement d'air d'une cabine d'un aéronef (10) au sol dans un aéroport (100), au moyen d'au moins une source, interne (11, 12) ou externe (21, 22, 23, 24), de puissance électrique et/ou pneumatique, **caractérisé en ce qu'**il comprend :
- une étape (510) de collecte en temps réel de données comprenant des paramètres de l'aéronef, des paramètres de sources de puissance, des données de vol de l'aéronef, des données d'infrastructures et d'équipements de l'aéroport ;
- une étape (520) de détermination des sources internes et externes de puissance disponibles, à partir d'une base de données d'équipements de l'aéroport ;
- une étape (530) d'évaluation, par des algorithmes spécifiques, d'une performance de chaque source de puissance disponible en fonction d'une température de consigne à atteindre dans la cabine et de données collectées ;
- une étape (540) de détermination d'un ensemble optimal de puissance comprenant au moins une source de puissance parmi les sources de puissance disponibles ;
- une étape (550) de vérification de l'utilisation de l'ensemble optimal ; et
- des étapes conditionnelles d'alerte (560) et de recommandation (570) de l'utilisation dudit ensemble optimal, en cas de non utilisation détectée.

2. Procédé selon la revendication 1, dans lequel les paramètres de l'aéronef comprennent une température intérieure de la cabine, une température extérieure, des paramètres d'un moteur principal (11) et d'un APU (12), et la température de consigne.

3. Procédé selon la revendication 1 ou 2, dans lequel les sources externes de puissance comprennent un GPU (21), un ACU (22), un PCA (23) et un FEGP (24).

4. Procédé selon l'une quelconque des revendications précédentes, dans lequel l'étape (520) de détermination des sources internes et externes de puissance disponibles met en oeuvre des algorithmes de détection automatique de connexion entre l'aéronef (10) et une quelconque source de puissance.

5. Procédé selon l'une quelconque des revendications précédentes, dans lequel la performance d'une source de puissance comprend son aptitude et le temps nécessaire à ladite source pour réaliser un conditionnement d'air de la cabine à la température de consigne.

6. Procédé selon l'une quelconque des revendications précédentes, dans lequel l'étape (540) de détermination de l'ensemble optimal présente pour chaque source de puissance un niveau de sélection selon la performance, un niveau de sélection selon un coût énergétique ou monétaire de l'utilisation de ladite source et un niveau de sélection selon des émissions polluantes lors de l'utilisation de ladite source.

7. Procédé selon l'une quelconque des revendications précédentes, dans lequel l'étape (540) de détermination de l'ensemble optimal est réalisée par apprentissage automatique.

8. Plateforme numérique comprenant des moyens informatiques de calcul et de stockage, et apte à communiquer sur un réseau, **caractérisée en ce qu'**elle est configurée pour mettre en oeuvre un procédé (500) de conditionnement d'air d'une cabine d'un aéronef (10) au sol, selon l'une quelconque des revendications précédentes.
